# EUROPÄISCHE PATENTANMELDUNG

(11) **EP 0 929 200 A2**
(43) Veröffentlichungstag der Anmeldung: **14.07.1999**
(21) Anmeldenummer: 98122089.0
(22) Anmeldetag: 21.11.1998
(51) Int. Cl.: H04Q 3/62

(54) **Verfahren und Vorrichtung zur Bereitstellung einer Durchwahlfunktion bei Telekommunikationsanlagen**

(30) Priorität: 12.01.1998 DE 19800716
(71) Anmelder: Deutsche Telekom AG, 53113 Bonn (DE)
(72) Erfinder: Naumburger, Volkmar Dr.-Ing., 15537 Erkner (DE)

(57) **Zusammenfassung**

Die Erfindung betrifft ein Verfahren sowie eine Vorrichtung zur Bereitstellung bzw. Simulation einer Durchwahlfunktion durch Bereitstellung einer Nachwahlfunktion bei Telekommunikationsanlagen, welche keine direkte Durchwahlmöglichkeit mit eigenen Rufnummern zu den Nebenstellen aufweisen. Die Durchwahlmöglichkeit wird realisiert, indem ein ankommender Anruf von der TK-Anlage automatisch angenommen wird, der Benutzer automatisch mittels einer akustischen Benutzerführung zur Eingabe von Nachwahlbefehlen aufgefordert wird, diese Nachwahlbefehle automatisch einer Nebenstelle zugeordnet werden sowie mit dieser Zuordnungsinformation ein elektronisches Weitervermittlungssignal erzeugt wird, welches die TK-Anlage zum Durchstellen der ankommenden Verbindung an eine Nebenstelle veranlaßt. Dieses Weitervermittlungssignal simuliert das Steuersignal, welches bei manueller Weitervermittlung zwischen den Nebenstellen von der TK-Anlage erzeugt wird. Die Vorrichtung zur Durchführung des Verfahrens ist als Schaltungsanordnung in eine TK-Anlage integriert oder als adaptive Lösung zur Aufrüstung bereits installierter TK-Anlagen ausgebildet.

## Beschreibung

Die Erfindung betrifft ein Verfahren zur Bereitstellung einer Durchwahlfunktion bei Telekommunikationsanlagen (TK-Anlagen), die keine direkte Durchwahlmöglichkeit zu den Nebenstellen unter Verwendung eigener Nebenstellen-Rufnummern aufweisen.

TK-Anlagen für den Heimgebrauch werden gewöhnlich an nur einen Amtsanschluß angeschlossen und verteilen eingehende Rufe nach einem fest programmierten Schema an die Nebenstellenanschlüsse der TK-Anlage. Auf diese Weise werden eingehende Rufe z.B. an alle Nebenstellen oder aber nur an eine ausgewählte Nebenstelle weitergeleitet. Eine differenzierte Weiterleitung im Sinne einer Nachwahl mit erweiterter Rufnummer ist bisher nicht möglich. Eine Abhilfe in einem gewissen Umfang wurde durch die Einführung des ISDN-Merkmals MSN (Multi Subscriber Number) geschaffen. Hier werden minimal drei, maximal 12 Rufnummern einem ISDN-Amtsanschluß zugewiesen. Dieses Verfahren ist aber fest an das Vorhandensein von ISDN-Amtsleitungen verknüpft und ist auch bei mehr als drei Rufnummern kostenpflichtig.

Ein weiterer Nachteil des Standes der Technik besteht darin, daß beim Nichtzustandekommen einer Verbindung, weil keine der Nebenstellen abhebt (Abwesenheit), eine Nachricht nur dann hinterlassen werden kann, wenn ein Anrufbeantworter an die TK-Anlage angeschlossen worden ist.

Der Erfindung liegt daher die Aufgabe zugrunde, eine Möglichkeit zur Realisierung einer Durchwahlfunktion bei derartigen TK-Anlagen bereitzustellen und dazu ein Verfahren sowie eine Vorrichtung anzugeben.

Die Lösung der Aufgabe besteht in einem Verfahren zur Bereitstellung einer Durchwahlfunktion bei Telekommunikationsanlagen (TK-Anlagen), die keine direkte Durchwahlmöglichkeit zu den Nebenstellen unter Verwendung eigener Nebenstellen-Rufnummern aufweisen, mit folgenden Merkmalen:
1.1. Eine ankommende Telekommunikationsverbindung wird automatisch von der TK-Anlage angenommen.
1.2. Eine akustische Benutzerführung weist den Anrufer auf die Durchbzw. Nachwahlfunktion hin und fordert ihn zur Eingabe von Nachwahlbefehlen auf.
1.3. Die Nachwahlbefehle sind mehrfrequenzkodierte Signale oder als Sprachbefehl eingegebene Signale, die jeweils eine einer anzuwählenden Nebenstelle eindeutig zuzuordnende Kennung, wie Nebenstellen-Nummer oder Namen des Nutzers des entsprechenden Endgeräts, enthalten.
1.4. Der eingegebene Nachwahlbefehl wird wie ein Sprachsignal zur TK-Anlage übertragen.
1.5.1. Der als mehrfrequenzkodiertes Signal eingegebene Nachwahlbefehl wird in ein elektronisches Weitervermittlungssignal umgesetzt, welches eine elektronische Kennung der anzuwählenden Nebenstelle enthält, oder
1.5.2. der als Sprache eingegebene Nachwahlbefehl wird in ein elektronisches Weitervermittlungssignal umgewandelt, indem das Sprachsignal einem vorbestimmten Sprachmuster zugeordnet wird, welches mit einer Nebenstelle assoziiert ist, und ein elektronisches Weitervermittlungssignal erzeugt wird, das eine elektronische Kennung dieser erkannten Nebenstelle enthält.
1.6. Durch das Weitervermittlungssignal wird das manuelle Weitervermitteln durch Eingabe eines Tastaturbefehls an einem Endgerät der TK-Anlage elektronisch simuliert und somit die TK-Anlage zur Weitervermittlung der Verbindung an die dem Nachwahlbefehl entsprechende Nebenstelle veranlaßt.

Wesentlich zur Lösung der Aufgabe ist weiterhin eine Vorrichtung zur Durchführung des Verfahrens, welche eine Ablaufsteuerung sowie eine Erkennereinheit aufweist. Die Ablaufsteuerung gibt bei einem ankommenden Anruf ein Steuersignal ab, welches die TK-Anlage veranlaßt, die Verbindung mit dem Anrufer herzustellen. Nach Verbindungsherstellung veranlaßt die Ablaufsteuerung die Ausgabe von Ansagetexten, welche in einem Speicher für Sprachbausteine hinterlegt sind. Diese Sprachbausteine weisen den Anrufer auf die Nachwahlfunktion hin und fordern ihn zur Eingabe von entsprechenden Nachwahlbefehlen auf. Die Ansagetexte sind vorzugsweise benutzerdefiniert, wobei dem Anrufer mitgeteilt wird, welchen Teilnehmer er an welcher Nebenstelle erreicht und welcher Nachwahlbefehl dazu einzugeben ist. Der Nachwahlbefehl kann als mehrfrequenzkodiertes Signal eingegeben werden, welches durch Tastatureingabe am Endgerät des Anrufers erzeugt und wie ein Sprachsignal zur angerufenen TK-Anlage übertragen wird. Alternativ kann der Nachweisbefehl auch ein Sprachsignal sein, also gesprochene Sprache, die ebenfalls in bekannter Weise zur TK-Anlage übertragen wird. Zum Empfang und Umsetzung dieser mehrfrequenzkodierten Signale bzw. Sprachsignale enthält die Erkennereinheit einen Mehrfrequenzempfänger oder einen Spracherkenner, ggf. auch beides.

Der Mehrfrequenzempfänger setzt den als mehrfrequenzkodiertes Signal eingegebenen Nachwahlbefehl in bekannter Weise in ein elektronisches Steuersignal um, das in der Regel ein digitales Signal ist, und übermittelt dies der Ablaufsteuerung. Da die Nachwahlbefehle eine Kennung enthalten, welche einer anzuwählenden Nebenstelle eindeutig zuzuordnen ist, enthält auch das umgesetzte Steuersignal die Kennung der angewählten Nebenstelle in elektronischer Form.

Bei als Sprachsignal eingegebenen Nachwahlbefehlen wird der Nachwahlbefehl als Sprachsignal dem Spracherkenner zugeführt, vorzugsweise nach einer Digitalisierung, welcher das Sprachsignal mit vorbestimmten, in einem Speicher in digitaler Form hinterlegten Sprachmustern vergleicht, die jeweils mit einer Nebenstelle assoziiert sind. Dem Nachwahlbefehl wird dann die Nebenstelle zugeordnet, deren assoziiertes Sprachmuster die größte Übereinstimmung mit dem Nachwahlbefehl aufweist. Der Spracherkenner leitet das Erkennungsergebnis in elektronischer Form als Steuersignal, in der Regel ein digitales Signal, an die Ablaufsteuerung weiter. Die Ablaufsteuerung setzt das von der Erkennereinheit übermittelte Signal, das eine elektronische Kennung der anzuwählenden Nebenstelle enthält, in ein Weitervermittlungssignal um. Dieses Weitervermittlungssignal ist so gewählt, daß es dem bei manueller Weitervermittlung innerhalb der TK-Anlage erzeugten Steuersignal entspricht. Dieses Weitervermittlungssignal besteht also aus dem Steuersignal "Durchstellen" und der erkannten Nebenstellennummer. Mit einer derartigen Vorrichtung wird erfindungsgemäß eine Nachwahlfunktion bereitgestellt und somit eine Durchwahlfunktion simuliert, wobei das Weitervermitteln bzw. Durchstellen der Verbindung in bekannter Weise von der TK-Anlage vorgenommen wird, nachdem diese das Weitervermittlungssignal empfangen hat. Die Vermittlungsmatrix der TK-Anlage legt beispielsweise die externe ankommende Verbindung auf Erde, versucht eine Verbindung zu der gewünschten Nebenstelle herzustellen und verknüpft die externe Verbindung mit der Verbindung zur Nebenstelle, falls an dieser der Telefonhörer abgenommen wird.

In einer Weiterbildung des Verfahrens wird automatisch die Ausgangssituation vor der Weitervermittlung wieder hergestellt, falls die weitervermittelte Verbindung innerhalb einer vorbestimmten Zeit oder nach einer vorbestimmten Anzahl Klingelzeichen nicht aufgenommen wird, d.h. die Nebenstelle nicht reagiert. Dann werden die Verfahrensschritte Mitteilung und Aufforderung zur Nachwahl unter Eingabe einer Nebenstelllenkennung und/oder des Namens des Teilnehmers, der einer bestimmten Nebenstelle zugeordnet ist, Übertragung des Nachwahlbefehls, Umsetzung in ein elektronisches Weitervermittlungssignal und Durchstellen der Verbindung an die dem Nachwahlbefehl entsprechenden Nebenstelle erneut durchgeführt. Die anzuwählende Nebenstelle kann dabei auch ein Anrufbeantworter sein.

In einer weiteren Ausgestaltung des Verfahrens wird die Ausgangssituation vor der Weitervermittlung automatisch wieder hergestellt, falls die weitervermittelte Verbindung nicht aufgenommen wird, und die Verbindung wird automatisch an einen Anrufbeantworter weitervermittelt oder eine Anrufbeantworterfunktion wird aktiviert.

Eine vorteilhafte Ausgestaltung der erfindungsgemäßen Vorrichtung sieht dazu vor, daß der Anrufbeantworterspeicher in Speicherbereiche gegliedert ist, die den einzelnen Nebenstellen zugeordnet sind. Die Nebenstelle, für die eine Nachricht hinterlassen werden soll, wird vom Anrufer durch Eingabe eines mehrfrequenzkodierten Signals oder eines Sprachsignals, welches von der Erkennereinheit in oben beschriebener Weise in ein elektronisches Steuersignal umgewandelt und von der Ablaufsteuerung verwertet wird, auswählbar ist. Alternativ wird die Nachricht bei Aktivierung der Anrufbeantworterkomponente automatisch der Nebenstelle zugewiesen, an welche die Verbindung zuvor erfolglos weitervermittelt wurde.

Als Zugriffssicherung ist vorgesehen, daß auf die Speicherbereiche des Anrufbeantworterspeichers von der assoziierten Nebenstelle aus direkt und von anderen Nebenstellen aus nach Eingabe eines Zugangscodes (PIN) zugegriffen werden kann.

Die erfindungsgemäße Vorrichtung kann integraler Bestandteil einer TK-Anlage sein, d.h. als Schaltungsanordnung direkt in die TK-Anlage implementiert sein.

Um jedoch die Aufrüstung bereits im Betrieb befindlicher TK-Anlagen mit einer Durchwahl- bzw. Nachwahlfunktion zu ermöglichen, ist es vorteilhaft, wenn die Vorrichtung als ein von der TK-Anlage unabhängiges Bauelement ausgebildet ist, welches die oben beschriebene Schaltungsanordnung enthält. In diesem Fall weist die Vorrichtung eine Schnittstelle zum Anschluß an einen Nebenstellenanschluß einer TK-Anlage auf und ist somit funktional mit der TK-Anlage koppelbar. Die Vorrichtung wird damit wie ein beliebiges Endgerät, z.B. Telefon oder Anrufbeantworter, an einen Nebenstellenanschluß der TK-Anlage angeschlossen. Signalübertragung und ggf. auch Stromversorgung erfolgt in bekannter Weise über diese Schnittstelle. Im Anwendungsfall wird diese Vorrichtung an diejenige Nebenstelle angeschlossen, an welche eingehende Rufe automatisch geleitet werden. Die TK-Anlage muß in diesem Fall so programmiert sein, daß an alle weitere Nebenstellen eingehende Rufe nicht direkt, sondern nur durch Weitervermittlung durch die erfindungsgemäße Vorrichtung geleitet werden.

Vorteilhaft ist weiterhin die Integration der erfindungsgemäßen Schaltungsanordnung in ein Telefon, wobei die Durchwahlfunktion ähnlich wie bei einem Anrufbeantworter nur aktiviert wird, wenn nach einer vorbestimmten Anzahl Rufzeichen die Verbindung nicht direkt am Endgerät durch manuelle Annahme der Verbindung durch einen Benutzer hergestellt wird.

Erfindungsgemäß wird bei Telekommunikationsanlagen, welche keine direkte Durchwahlmöglichkeit mit eigenen Rufnummern zu den Nebenstellen aufweisen, durch die Bereitstellung einer Nachwahlfunktion eine Durchwahlfunktion simuliert.

Kurzbeschreibung der Zeichnung, in der zeigen:
- Figur 1: ein Blockschaltbild einer TK-Anlage mit integrierter Vorrichtung zur Simulation einer Durchwahlfunktion
- Figur 2: ein Blockschaltbild einer TK-Anlage mit separater, an einen Nebenstellenanschluß angeschlossener Vorrichtung zur Simulation einer Durchwahlfunktion
- Figur 3: schematisch eine Erkennereinheit mit parallel geschaltetem Spracherkenner sowie Mehrfrequenzempfänger.

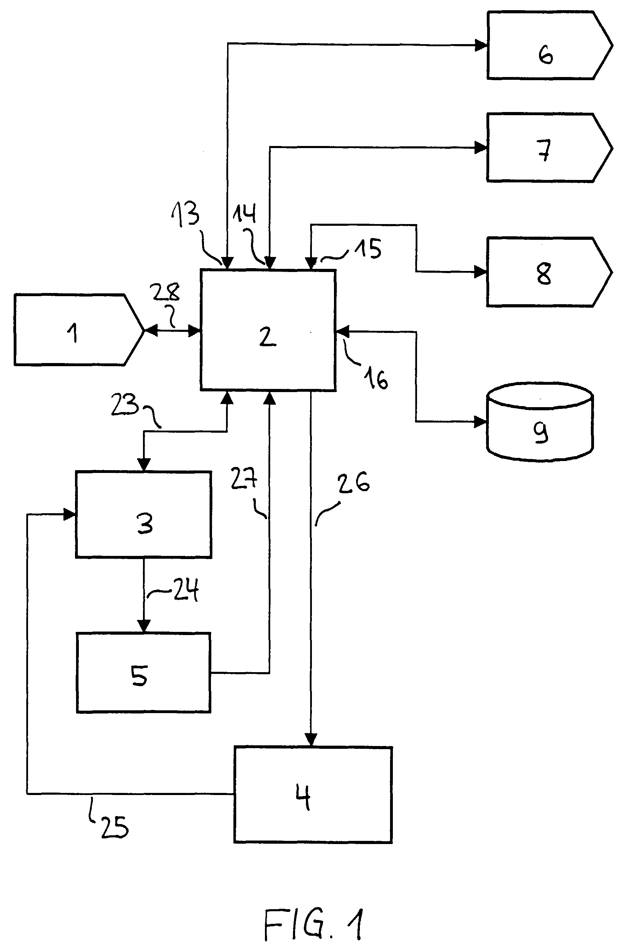

Figur 1 zeigt ein Blockschaltbild einer Telekommunikationsanlage, in welcher eine erfindungsgemäße Vorrichtung zur Simulation einer Durchwahlfunktion implementiert ist. Die funktionale Kopplung der einzelnen Komponenten ist durch Pfeile angedeutet, wobei die Pfeilrichtung die Richtung des Informationsflusses angibt.

Die TK-Anlage weist in bekannter Weise einen Telefonnetzanschluß 1 sowie eine Vermittlungsmatrix 2 auf. Die Funktionen der Vermittlungsmatrix 2 werden von einer Ablaufsteuerung 3 gesteuert, welche in diesem Ausführungsbeispiel sowohl die normalen Funktionen der TK-Anlage steuert als auch zur Durchführung des erfindungsgemäßen Verfahrens beiträgt. Zwischen Ablaufsteuerung 3 und Vermittlungsmatrix 2 werden Steuersignale über einen entsprechenden Steuerkanal 23 bidirektional übertragen.

Die TK-Anlage weist vier Nebenstellenanschlüsse 13, 14, 15, 16 auf, an welche drei Nebenstellen 6, 7, 8 sowie ein Anrufbeantworter 9 angeschlossen sind. Im Falle einer gewöhnlichen TK-Anlage wird ein eingehender Anruf über den Netzzugang 1 an die Vermittlungsmatrix 2 geleitet. Die Ablaufsteuerung 3 bestimmt, an welche der Nebenstellenanschlüsse 13, 14, 15, 16 der Anruf weitergeleitet werden soll, d. h. an welche der Nebenstellen 6, 7, 8 bzw. Anrufbeantworter 9 die Steuersignale, die die ankommende Verbindung anzeigen, weitergeleitet werden sollen. Sind die Endgeräte an den Nebenstellen Telefone, ertönt in diesem Fall ein Klingelzeichen. Wird das entsprechende Endgerät aktiviert, z.B. der Hörer abgenommen, so ist die Verbindung zwischen den externen Anrufen sowie dem Endgerät hergestellt. Dann können Sprache und sonstige Informationen über die Verbindung zwischen dem externen Anrufer und dem Endgerät übertragen werden.

Die Simulation einer Durchwahlfunktion bzw. die Bereitstellung einer Nachwahlfunktion bei Implementierung einer erfindungsgemäßen Schaltungsanordnung läuft wie folgt ab:

Die TK-Anlage ist über den Fernmeldeanschluß 1 in bekannter Weise an ein Telefon-Testnetz angeschlossen. Zunächst wird der eingehende Ruf von der internen Vermittlungsmatrix 2, die von der Ablaufsteuerung 3 aktiviert wurde, angenommen. Dazu empfängt die Ablaufsteuerung 3 von der Vermittlungsmatrix 2 ein Signal, welches eine ankommende Verbindung anzeigt und sendet daraufhin über die Datenleitung 23 ein Steuersignal, welches die Vermittlungsmatrix 2 zur Annahme der Verbindung veranlaßt.

Die Ablaufsteuerung 3 veranlaßt weiterhin mittels Steuersignalen, welche über eine Datenleitung 24 übertragen werden, die Ausgabe von Ansagetexten aus einem Sprachbausteinspeicher 5. Dazu wird zunächst eine Verbindung zwischen dem Sprachbausteinspeicher 5 und der Vermittlungsmatrix 2 und damit auch zum externen Anrufer hergestellt, so daß Sprachinformationen übertragbar sind. Die Ansagetexte sind vorzugsweise benutzerdefiniert und im Sprachbausteinspeicher in digitaler Form hinterlegt. Diese Sprachinformationen werden über eine Datenleitung 27 direkt der Vermittlungsmatrix zugeführt und können somit vom entfernten Anrufer als akustisches Signal empfangen werden. Die Ablaufsteuerung 3 hat inzwischen die Vermittlungsmatrix 2 so eingestellt, daß der Begrüßungstext an den fernen Teilnehmer übermittelt wird. Mit dem Begrüßungstext werden die Bedienhinweise für die Nachwahl an den fernen Teilnehmer übertragen. Der Anrufer wird aufgefordert, bestimmte Nachwahlbefehle einzugeben, welche eine Kennung der anzuwählenden Nebenstelle enthalten. Dazu wird dem Anrufer vorzugsweise mitgeteilt, welchen Teilnehmer er unter welcher Bezeichnung oder mit welcher Tastaturbefehl erreichen kann.

Nach der Begrüßung und Benutzeranleitung wird die Verbindung zwischen Sprachbausteinspeicher 5 und Vermittlungsmatrix 2 unterbrochen sowie eine Verbindung von der Vermittlungsmartrix 2 zur Erkennungseinheit 4 hergestellt. Alternativ bestehen die Verbindungen zwischen Sprachbausteinspeicher 5 bzw. Erkennungseinheit 4 und Vermittlungsmatrix 2 parallel. Dies hat den Vorteil, daß der mit der Nachwahlfunktion bereits vertraute Benutzer die Nachwahlbefehle eingeben kann, ohne den vollständigen Begrüßungstext abzuwarten.

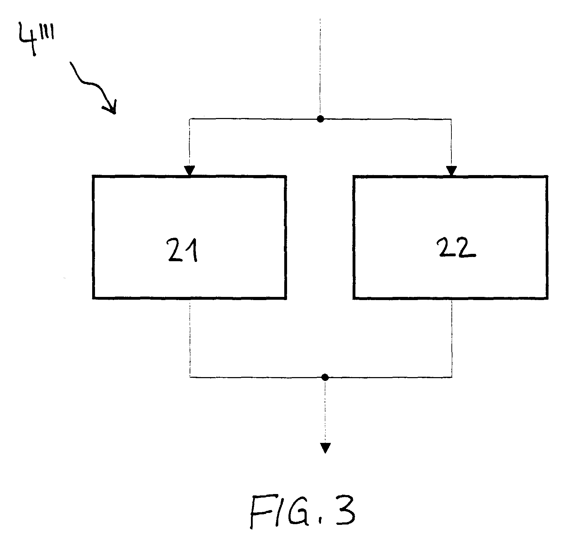

Über die Datenleitung 28 zur TK-Anlage eingehende Informationen werden über eine Datenleitung 26 an die Erkennungseinheit 4 übertragen. Damit werden die vom Anrufer eingegebenen Nachwahlbefehle zur Erkennungseinheit 4 übermittelt und können von dieser identifiziert werden. Die Erkennungseinheit 4 enthält einen Mehrfrequenzempfänger oder einen Spracherkenner oder, wie Figur 3 zeigt, beide Elemente. Als Nachwahlbefehle kommen dabei jeweils die Signale in Frage, welche von der Erkennungseinheit identifiziert und verarbeitet werden können. Ein mehrfrequenzkodiertes Signal, z.B. DTMF-Signal, wird in bekannter Weise in ein digitales elektronisches Steuersignal umgewandelt, welches der Ablaufsteuerung 3 übermittelt wird. Entsprechend wird im Falle eines Spracherkenners ein Sprachsignal mit vorbestimmten Sprachmustern verglichen, welche in einer Trainingsphase eingelernt wurden. Der Spracherkenner ist dabei vorzugsweise ein phonembasierter sprecherunabhängiger Spracherkenner, z.B. ein HMM- Spracherkenner. Den vorbestimmten Sprachmustern sind jeweils Kennungen einer bestimmten Nebenstelle zugeordnet. Die Kennung des identifizierten Sprachmusters wird als digitales elektronisches Steuersignal von der Erkennungseinheit 4 zur Ablaufsteuerung 3 übermittelt. Damit liegt der Ablaufsteuerung in beiden Fällen die Information über die anzuwählende Nebenstelle vor. Das von der Erkennungseinheit 4 erzeugte elektronische Steuersignal entspricht entweder direkt der Nummer der anzuwählenden Nebenstelle oder ist dieser eindeutig zuzuordnen.

Die Ablaufsteuerung erzeugt daraufhin unter Einbeziehung der Nummer der anzuwahlenden Nebenstelle ein Weitervermittlungssignal, welches über die Datenleitung 23 der Vermittlungsmatrix 2 übermittelt wird. Dieses Signal ist mit demjenigen identisch, welches bei manueller Weitervermittlung von einem an eine Nebenstelle angeschlossenen Endgerät zu einem weiteren innerhalb derselben TK-Anlage erzeugt wird. Von der Vermittlungsmatrix wird, veranlaßt durch dieses Weitervermittlungssignal, eine Verbindung zum anzuwählenden Nebenanschluß aufgebaut und mit der schon bestehenden ersten Verbindung zum fernen Teilnehmer verknüpff. Während des Verbindungsaufbaus innerhalb der TK-Anlage zur angewählten Nebenstelle wird die externe Verbindung in der Regel auf Erde gelegt, wobei dem Anrufer gegebenenfalls eine Pausenmusik o.ä. eingespielt wird. Somit wird für den fernene Teilnehmer eine Durchwahlfunktion bereitgestellt.

Wird die durchgestellte Verbindung an der angewählten Nebenstelle innerhalb einer bestimmten Zeit oder nach einer gegebenen Anzahl von Klingelzeichen nicht aufgenommen, wird die Verbindung von der Vermittlungsmatrix 2 zur angewählten Nebenstelle wieder unterbrochen. Der Anrufer wird dann durch ein von der Ablaufsteuerung 3 erzeugtes Steuersignal von der Vermittlungsmatrix 2 an einen Anrufbeantworter 9 weitergeleitet. Alternativ wird die Nachwahlfunktion erneut zur Verfügung gestellt: Gesteuert durch die Ablaufsteuerung 3 wird der entfernte Anrufer über Sprachbausteine zur erneuten Nachwahl aufgefordert, wobei die von ihm eingegebenen Nachwahlbefehle in der bereits geschilderten Weise verarbeitet werden und zur Erzeugung eines Weitervermittlungssignals führen. Mit der Nachwahl kann der Anrufer sich an den direkt zum Anrufbeantworter 9 durchstellen lassen, falls ein solcher angeschlossen ist.

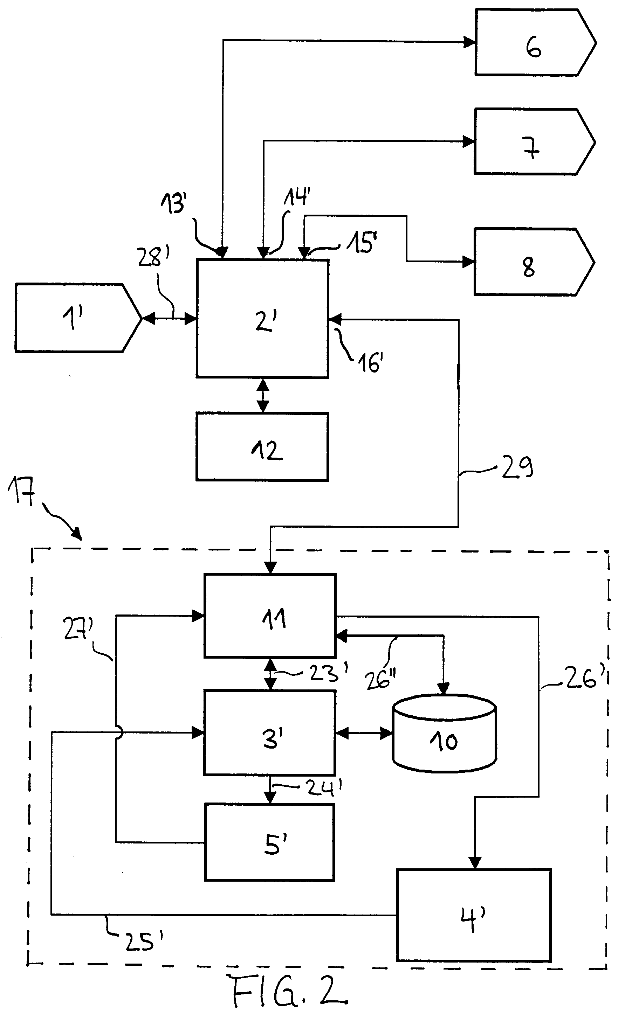

Figur 2 zeigt eine Ausgestaltung der erfindungsgemäßen Vorrichtung 17 als adaptive Lösung, welche an einen Nebenstellenanschluß 16' einer TK-Anlage anschließbar ist. Die TK-Anlage bleibt dabei strukturell unverändert, so daß bekannte bereits im Betrieb befindliche Anlagen mittels eines derartigen erfindungsgemäßen Adapters 17 mit einer Nachwahlfunktion ausgerüstet werden können. Die Komponenten der TK-Anlage sind schematisch im oberen Bereich der Figur 2, die Komponenten des Adapters 17 im unteren Bereich der Figur 2 dargestellt, wobei die Kopplung der einzelnen Bauelemente durch Pfeile angedeutet wird. Die Funktionsweise der einzelnen Komponenten stimmt im wesentlichen mit denen der Vorrichtung aus Figur 1 überein, wobei die Funktion der Ablaufsteuerung aus Figur 1 bei der in Figur 2 gezeigten Vorrichtung von der Ablaufsteuerung 3' des Adapters sowie vom Controller 12 der TK-Anlage übernommen wird. Der Controller 12 steuert dabei in bekannter Weise die Funktionen der TK-Anlage, wie Anrufannahme, Durchstellen zwischen Nebenstellen sowie Verbindungsabbau. Die Ablaufsteuerung 3' steuert die Funktionen des erfindungsgemäßen Adapters 17, bestehend aus den Komponenten Ablaufsteuerung 3', Erkennungseinheit 4', Sprachbausteinspeicher 5', Anrufbeantworterkomponente 10, Schnittstelle 11 sowie Datenleitungen mit den Bezugsziffern 23' bis 27' zwischen den einzelnen Komponenten.

Die in Figur 2 dargestellte TK-Anlage weist vier Nebenstellenanschlüsse 13', 14', 15', 16' auf, an dreien von diesen sind herkömmliche Nebenstellen 6,7,8 angeschlossen. Die erfindungsgemäße Vorrichtung 17 ist als externes Gerät an den Nebenstellenanschluß 16' der TK-Anlage angeschlossen. Die Datenübertragung zwischen TK-Anlage und Adapter 17 erfolgt über eine herkömmliche Datenleitung 29, welche zur Übertragung von Sprach- und Steuersignalen ausgelegt ist. Die Übertragung der Signale kann in getrennten Sprach- und Steuerkanälen erfolgt, aber auch in einem gemeinsamen Kanal, wobei Steuer- und Nutzinformation durch die Art des Signals unterschieden wird. Im letzteren Fall sind die Steuersignale beispielsweise mehrfrequenzkodierte Signale, welche wie Sprache übertragen werden.

Damit die Durchwahlfunktion simuliert werden kann, müssen zunächst alle externen Anrufe von der TK-Anlage an den Nebenstellenanschluß 16' und damit an den Adapter 17 weitervermittelt werden. Der Controller 12 ist so programmiert, daß er die Vermittlungsmatrix 2 dazu veranlaßt, alle ankommenden Verbindungen zunächst auf diese Weise zu vermitteln. Eine ankommende Verbindung wird über die Schnittstelle 11 dem Adapter 17 zugeführt. Dabei wird über die Schnittstelle 11 die über die Datenleitung 29 übermittelte Information den nachgeschalteten Einheiten Ablaufsteuerung 3' und Erkennereinheit 4' über die Datenleitung 23' bzw. 26' zugeführt. Die Ablaufsteuerung 3' verarbeitet im Übertragungssignal enthaltene Steuerinformation, die Erkennungseinheit 4' im Übertragungssignal enthaltene Sprachinformation.

Die Ablaufsteuerung 3' sendet über die Schnittstelle 11 ein Steuersignal an die TK-Anlage, welches die Herstellung der Verbindung anzeigt. Gleichzeitig veranlaßt die Ablaufsteuerung 3' die Ausgabe von Ansagetexten aus dem Sprachbausteinspeicher 5', welche über die Datenleitung 27' zur Schnittstelle 11 geführt und dort als Sprachsignal in elektronischer Form in die Datenleitung 29 eingekoppelt werden. Die Verbindung vom Sprachbausteinspeicher 5' zur Vermittlungsmatrix ist mit der externen Verbindung verbunden, somit kann der Anrufer den Ansagetext als akustisches Signal empfangen.

Vom Anrufer eingegebene Nachwahlbefehle werden wie oben dargestellt, über die ankommende Verbindung in die Verbindung zwischen Vermittlungsmatrix 2' und Adapter 17 eingekoppelt. In der Schnittstelle 11 werden die ankommenden Sprachsignale auf den Eingang der Erkennungseinheit 4' gegeben. Die Erkennungseinheit 4' liefert in oben dargestellter Weise ein Erkennungsergebnis, welches über die Datenleitung 25' der Ablaufsteuerung 3' übermittelt wird. Diese erzeugt ein Weitervermittlungssignal, welches über die Schnittstelle 11 zur TK-Anlage übertragen wird. Der Controller 12 veranlaßt bei Empfang dieses Weitervermittlungssignals die Vermittlungsmatrix 2' zum Aufbau einer Verbindung zur angewählten Nebenstelle. Ist diese Verbindung aufgebaut, so wird die über den Telefonnetzanschluß 1' anliegende Verbindung mit der Verbindung von der Verbindungsmatrix 2' zur angewählten Nebenstelle verknüpft. Die Verbindung von der Vermittlungsmatrix 2' zum Adapter 17 wird dabei unterbrochen. Somit kann sich der externe Anrufer unter Zuhilfenahme des Adapters 17 selbsttätig mit einer der zur Verfügung stehenden Nebenstellen verbinden.

Reagiert die angewählte Nebenstelle nicht, d.h. gelingt der Verbindungsaufbau von der Vermittlungsmatrix 2' zu dieser Nebenstelle nicht, so wird der Benutzer von der Ablaufsteuerung 3' durch Aufgabe entsprechender Ansagetexte aus dem Sprachbausteinspeicher 5' zur erneuten Eingabe eines Nachweisbefehls aufgefordert. Die auf die Weitervermittlung wartende externe Verbindung wird dazu, veranlaßt durch ein entsprechendes Steuersignal von der Ablaufsteuerung 3', von Erde genommen und erneut mit dem Adapter verbunden. Dieser Nachwahlbefehl kann auch die Anwahl eines an eine weitere Nebenstelle angeschlossenen Anrufbeantworters oder einer in den Adapter integrierten Anrufbeantworterkomponente 10 sein. Alternativ wird der Anruf ohne erneute Mitteilung an den entfernten Anrufer direkt auf die Anrufbeantworterkomponente 10 geleitet. Dazu weist der Adapter eine Datenleitung 26'' von der Schnittstelle 11 zur Anrufbeantworterkomponente 10 auf, durch welche die Anrufbeantworterkomponente parallel zur Erkennereinheit 4' geschaltet ist. Diese Datenleitung 26'' ist zum Besprechen sowie zum Abhören des Anrufbeantworters bidirektional benutzbar.

Der Anrufbeantworterspeicher ist vorzugsweise in Speicherbereiche unterteilt, in welchen Nachrichten nebenstellenspezifisch abgespeichert werden.

Figur 3 zeigt schematisch den Aufbau einer Erkennereinheit 3'. Diese weist einen Mehrfrequenzempfänger 21 sowie einen Spracherkenner 22 auf, welche parallel geschaltet sind. Die Eingänge der beiden Bausteine 21, 22 werden mit dem Sprachkanal der TK-Anlage verbunden. Der Anrufer kann somit Nachwahlbefehle sowohl als mehrfrequenzkodiertes Signal als auch als Sprachsignal eingeben. Die eingegebenen Nachwahlbefehle werden jeweils dem Mehrfrequenzempfänger 21 sowie dem Spracherkenner 22 zugeführt, wobei diejenige Komponente ein Erkennungsergebnis als elektronisches Steuersignal liefert, welche an das eingegebene Signal angepaßt ist. Die jeweils andere Komponente liefert kein Ausgangssignal.

Vorzugsweise ist zusätzlich noch vorgesehen, daß die Ablaufsteuerung den Benutzer zu erneuter Eingabe eines Nachwahlbefehl auffordert, falls die Erkennungseinheit keinen Nachwahlbefehl identifizieren konnte.

### Liste der Bezugszeichen:

- 1, 1': Telefonnetzzugang
- 2, 2': Vermittlungsmatrix
- 3, 3': Ablaufsteuerung
- 4, 4', 4''': Erkennungseinheit
- 5, 5': Sprachbausteinspeicher
- 6, 7, 8: Nebenstelle
- 9: Anrufbeantworter
- 10: Anrufbeantworterkomponente
- 11: Schnittstelle für Nebenanschluß
- 12: Controller
- 13, 13', 14, 14' 15, 15', 16, 16': Nebenstellenanschluß
- 17: Adapter zur Simulation einer Durchwahlfunktion
- 21: Mehrfrequenz-Empfänger
- 22: Spracherkenner
- 23, 23', 24, 24' 25, 25': Datenleitung für Steuersignale
- 26, 26', 26'', 27, 27': Datenleitung für Sprachsignale
- 28, 28', 29: Datenleitung für Sprach- und Steuersignalübertragung

## Patentansprüche

1. Verfahren zur Bereitstellung einer Durchwahlfunktion bei Telekommunikationsanlagen (TK-Anlagen), die keine direkte Durchwahlmöglichkeit unter Verwendung eigener Rufnummern zu den Nebenstellen (6, 7, 8) aufweisen, mit folgenden Merkmalen:
1.1. Eine ankommende Telekommunikationsverbindung wird automatisch von der TK-Anlage angenommen.
1.2. Eine akustische Benutzerführung weist den Anrufer auf die Durchbzw. Nachwahlfunktion hin und fordert ihn zur Eingabe von Nachwahlbefehlen auf.
1.3. Die Nachwahlbefehle sind mehrfrequenzkodierte Signale oder als Sprachbefehl eingegebene Signale, die jeweils eine einer anzuwählenden Nebenstelle (6, 7, 8) eindeutig zuzuordnende Kennung, wie Nebenstellen-Nummer oder Namen des Nutzers des entsprechenden Endgeräts, enthalten.
1.4. Der eingegebene Nachwahlbefehl wird wie ein Sprachsignal zur TK-Anlage übertragen.
1.5.1. Der als mehrfrequenzkodiertes Signal eingegebene Nachwahlbefehl wird in ein elektronisches Weitervermittlungssignal umgesetzt, welches eine elektronische Kennung der anzuwählenden Nebenstelle enthält, oder
1.5.2. der als Sprache eingegebene Nachwahlbefehl wird in ein elektronisches Weitervermittlungssignal umgewandelt, indem das Sprachsignal einem vorbestimmten Sprachmuster zugeordnet wird, welches mit einer Nebenstelle (6, 7, 8) assoziiert ist, und ein Weitervermittlungssignal erzeugt wird, das eine elektronische Kennung dieser erkannten Nebenstelle enthält.
1.6. Durch das Weitervermittlungssignal wird das manuelle Weitervermitteln durch Eingabe eines Tastaturbefehls an einem Endgerät der TK-Anlage elektronisch simuliert und somit die TK-Anlage zur Weitervermittlung der Verbindung an die dem Nachwahlbefehl entsprechende Nebenstelle veranlaßt.

2. Verfahren nach Anspruch 1, dadurch gekennzeichnet,
daß ein Anrufbeantworter (9, 10) als Nebenstelle (6, 7, 8) anwählbar ist.

3. Verfahren nach Anspruch 1 oder 2, dadurch gekennzeichnet,
daß automatisch die Ausgangssituation vor der Weitervermittlung wiederhergestellt wird, falls die weitervermittelte Verbindung innerhalb einer vorbestimmten Zeit oder nach einer vorbestimmten Anzahl Klingelzeichen nicht aufgenommen wird, d.h. die Nebenstelle nicht reagiert, und die Verfahrensschritte 1.2. bis 1.6. erneut durchgeführt werden.

4. Verfahren nach einem der vorangegangenen Ansprüche, dadurch gekennzeichnet,
daß automatisch die Ausgangssituation vor der Weitervermittlung wiederhergestellt wird, falls die weitervermittelte Verbindung innerhalb einer vorbestimmten Zeit oder nach einer vorbestimmten Anzahl Klingelzeichen nicht aufgenommen wird, und die Verbindung an einen Anrufbeantworter (9) weitervermittelt oder eine Anrufbeantworterfunktion aktiviert wird.

5. Vorrichtung zur Durchführung des Verfahrens nach einem der vorangegangenen Ansprüche, gekennzeichnet durch:
5.1. Eine Ablaufsteuerung (3, 3') sowie
5.2. eine Erkennereinheit (4, 4', 4''),
wobei
5.1.1. die Ablaufsteuerung (3, 3') bei einem ankommenden Anruf ein Steuersignal abgibt, welches die TK-Anlage veranlaßt, die Verbindung herzustellen,
5.1.2. die Ablaufsteuerung (3, 3') nach Verbindungsherstellung die Ausgabe von Ansagetexten, welche in einem Speicher (5') für Sprachbausteine hinterlegt sind, an den Anrufer veranlaßt,
5.1.3. und die Ablaufsteuerung (3, 3') das von der Erkennereinheit (4, 4', 4'') übermittelte Steuersignal, das eine elektronische Kennung der anzuwählenden Nebenstelle enthält, in ein Weitervermittlungssignal umsetzt, welches dem bei manueller Weitervermittlung innerhalb der TK-Anlage erzeugten Signal entspricht,
und wobei
5.2.1. die Erkennereinheit (4, 4', 4'') einen Mehrfrequenz-Empfänger (21) enthält, der den als mehrfrequenzkodiertes Signal eingegebenen Nachwahlbefehl in ein Steuersignal umsetzt und der Ablaufsteuerung übermittelt, welches die Kennung der angewählten Nebenstelle in elektronischer Form enthält,
oder
5.2.2. die Erkennereinheit (4, 4', 4'') einen Spracherkenner (22) enthält, der das Sprachsignal, das dem als Sprache eingegebenen Nachwahlbefehl entspricht, mit vorbestimmten, in einem Speicher in digitaler Form hinterlegten Sprachmustern vergleicht, welche jeweils mit einer Nebenstelle assoziiert sind, dem Nachwahlbefehl bzw. dem Sprachsignal die Nebenstelle zuordnet, deren assoziiertes Sprachmuster die größte Übereinstimmung mit dem Sprachsignal aufweist, sowie ein Steuersignal erzeugt und an die Ablaufsteuerung weiterleitet, das eine elektronische Kennung dieser erkannten Nebenstelle enthält.

6. Vorrichtung nach Anspruch 5, dadurch gekennzeichnet,
daß sie integraler Bestandteil einer TK-Anlage ist.

7. Vorrichtung nach Anspruch 5, dadurch gekennzeichnet,
daß sie als von der TK-Anlage unabhängige Vorrichtung ausgebildet ist, eine Schnittstelle (11) zum Anschluß an einen Nebenstellenanschluß (13, 13', 14, 14', 15, 15', 16, 16') einer TK-Anlage aufweist und somit funktional mit der TK-Anlage koppelbar ist.

8. Vorrichtung nach Anspruch 5, dadurch gekennzeichnet,
daß sie in ein Telefon integriert ist, wobei die Durchwahlfunktion aktiviert wird, wenn nach einer vorbestimmten Anzahl Rufzeichen oder innerhalb einer vorbestimmten Zeit die Verbindung nicht direkt am Endgerät durch manuelle Annahme der Verbindung hergestellt wurde.

9. Vorrichtung nach einem der Ansprüche 5 bis 8, dadurch gekennzeichnet,
daß eine Anrufbeantworterkomponente (10) integriert ist.

10. Vorrichtung nach Anspruch 9, dadurch gekennzeichnet,
daß der Anrufbeantworterspeicher in Speicherbereiche gegliedert ist, die den einzelnen Nebenstellen (6, 7, 8) zugeordnet sind, wobei die Nebenstelle, für die eine Nachricht hinterlassen werden soll, vom Anrufer durch Eingabe eines mehrfrequenzkodierten Signals oder eines Sprachsignals, welches von der Erkennereinheit (4, 4', 4'') in ein elektronisches Steuersignal umgewandelt und von der Ablaufsteuerung verwertet wird, auswählbar ist oder die Nachricht automatisch der Nebenstelle zugewiesen wird, an welche die Verbindung zuvor erfolglos weitervermittelt wurde.

11. Vorrichtung nach Anspruch 10, dadurch gekennzeichnet,
daß die Speicherbereiche des Anrufbeantworterspeichers von der assoziierten Nebenstelle aus direkt und von anderen Nebenstellen aus nach Eingabe eines Zugangskodes (PIN) nebenstellenspezifisch abhörbar sind.

12. Vorrichtung nach einem der Ansprüche 5 bis 11, dadurch gekennzeichnet,
daß der Spracherkenner (22) ein sprecherunabhängiger, phonembasierter Spracherkenner, insbesondere ein HMM-Spracherkenner, ist.
